# EUROPEAN PATENT APPLICATION

(11) **EP 3 296 963 A1**
(43) Date of publication of application: **21.03.2018**
(21) Application number: 17190203.4
(22) Date of filing: 19.07.2013
(51) Int. Cl.: G07C 5/00, G07C 5/08

(54) **PLATFORM HEALTH MONITORING SYSTEM**

(30) Priority: 18.10.2012 US 201213655169
(62) Divisional of application: 13177301.2
(71) Applicant: The Boeing Company, Chicago, IL 60606-1596 (US)
(72) Inventor: SAFA-BAKHSH, Robab, Ambler, PA Pennsylvania 19002 (US); HARRIS, Patrick, Bonney Lake, WA Washington 98391 (US)
(74) Representative: Shipp, Nicholas

(57) **Abstract**

A platform health monitoring system including an associative memory. The associative memory stores a plurality of known health profiles for a platform. The platform health monitoring system also includes an input device in communication with the associative memory. The input device is configured to receive a current health profile of the platform. The platform health monitoring system also may include a comparator configured to compare, in conjunction with the associative memory, the current health profile with the plurality of known health profile to generate a comparison. The comparator is further configured to generate, based on the comparison and in conjunction with the associative memory, a report on a current health of the platform.

## Description

### BACKGROUND INFORMATION

### 1. Field:

The present disclosure relates generally to platforms and, in particular, to a method and apparatus for monitoring platforms. Still more particularly, the present disclosure relates to a method and apparatus for monitoring the health and function of platform systems and subsystems.

### 2. Background:

A platform may take the form of, for example, without limitation, a mobile platform, a stationary platform, a land-based structure, an aquatic-based structure, a space-based structure, an aircraft, a submarine, a bus, a personnel carrier, a tank, a train, an automobile, a spacecraft, a space station, a satellite, a surface ship, and/or some other suitable platform. The reliability of a platform is important to the operation and use of the platform.

For example, with aircraft, it is desirable to know when different components of the aircraft may need maintenance. The maintenance may be performed using maintenance schedules. With the scheduled maintenance, unscheduled interruptions in the use of the aircraft may be avoided. Even with the scheduled maintenance, components may require replacement or maintenance at times other than those indicated by schedules. As a result, an aircraft may be out of service at unplanned times. This situation may require having additional aircraft or delays in transporting passengers or cargo, or performing its mission.

Additionally, health monitoring systems are used to monitor various systems of a platform. Current health monitoring systems monitor components for indications that the component is not operating at a desired level of performance. The monitoring of a platform is performed by gathering information from these different components or sensors associated with the components and comparing their raw or processed output with a set threshold. This set threshold may be identified based on engineering analysis which disregards impact of other factors to the sensor raw data and the processed output. Currently available health monitoring systems receive and process large amounts of data from sensors for use in assessing the health of different systems and components in a platform.

Currently available health monitoring systems use limited sets of data from specific on-board sensors or sources to assess the health of a platform. For example, the health of a particular system may be derived from data collected from a particular set of sensors. Other available on-board and off-board data related to the health of the platform are not used in identifying the health of that system. Such data is not used currently due to complexity of physical correlation of the sensor data and inefficiency of processing large volumes of data with existing methods.

Currently available systems, however, may not provide an identification of the health of a vehicle with a desired amount of accuracy. When the accuracy does not meet desired levels, increased maintenance may occur. This increased maintenance may be due to missed, false, or late identification of inconsistencies in the vehicle. For example, if maintenance needed for a transmission system of a vehicle is not identified with the desired amount of accuracy, maintenance may not be performed on the correct component, resulting in unnecessary maintenance, increased maintenance cost, and reduced aircraft availability. As a result, additional parts, equipment, labor, and time may be needed to perform maintenance and obtain the desired performance from the transmission system.

Still further, data collected from the sensors can be influenced by maintenance actions that have taken place on a component. As a result of maintenance, changes in the output of the sensors incorrectly can appear to exceed set fault thresholds without actual part failure. Current health monitoring systems cannot distinguish between sensor output change due to maintenance on the vehicle or sensor output change due to the change in the part operational conditions.

Current health monitoring systems process only sensor data and do not take advantage on observations by crew and maintainers. For example, the crew can state that there was a smell of fumes around wirings. This piece of information for diagnosing an issue is not included in current sensor based diagnostics systems.

Therefore, it would be advantageous to have a method and apparatus that addresses one or more of the issues discussed above, as well as possibly other issues.

### SUMMARY

The illustrative embodiments provide for a platform health monitoring system. The platform health monitoring system includes an associative memory comprising a plurality of data and a plurality of associations among the plurality of data. The plurality of data and their associations are collected into associated groups. The associative memory is configured to be queried based on at least indirect relationships among the plurality of data. The associative memory also stores a plurality of known health profiles for a platform. The platform health monitoring system also includes an input device in communication with the associative memory. The input device is configured to receive a current health profile of the platform. The platform health monitoring system also may include a comparator configured to compare, in conjunction with the associative memory, the current health profile with the plurality of known health profile to generate a comparison. The comparator is further configured to generate, based on the comparison and in conjunction with the associative memory, a report on a current health of the platform.

The current health profile may comprise sensor data obtained from a sensor disposed on the platform. The platform may comprise an aircraft and wherein the current health profile may further comprise maintenance data obtained from maintenance records derived from on-ground maintenance of the aircraft. The current health profile may further comprise a record of an observation of the platform performed by a human, wherein the observation is different than indications derived from the sensor data. The comparing may further comprise identifying an indirect relationship between a first attribute in the current health profile and a second attribute in the plurality of known health profiles. At least some of the plurality of associations may be generated by the associative memory.

The input device may be configured to receive sensor data relating to measurements taken by a sensor disposed on the platform. The input device may be further configured to receive maintenance data relating to maintenance of the platform. The maintenance data may be distinct from and unrelated to the sensor data. The comparator may be configured to use both the sensor data and the maintenance data in conjunction with the associative memory to generate the report of a health of the platform. The maintenance data may comprise a report submitted by a human. The platform may comprise an aircraft and wherein the sensor data may comprise information relating to conditions experienced by the aircraft during operation of the aircraft. The associative memory may be part of an off-board computer system. The maintenance data may comprise a report submitted by human ground crew personnel. The input device may be further configured to receive a plurality of additional information in a plurality of different formats. The comparator may be further configured to use not only the sensor data and the maintenance data, but also the plurality of additional information, in conjunction with the associative memory to generate the report. The platform may comprise an aircraft. The plurality of additional information may be selected from one or more of the group consisting of: a measurement of the aircraft by an off-board device, data from a flight system of the aircraft, a past maintenance record of the aircraft, a report by a pilot of the aircraft, a report by a ground crew operator responsible for maintaining the aircraft, and a first profile of an ideal health of the aircraft. The comparator may be further configured to use not only the sensor data and the maintenance data, but also a known health profile of the platform, in conjunction with the associative memory to generate the report. The sensor data and the maintenance data may be part of one or more current health profiles of the platform. The comparator may be further configured to generate the report by assigning a current health status of the platform based on a maximum similarity between the one or more current health profiles and the known health profile of the platform. The comparator may be further configured to use the associative memory to identify a potential cause of a component of the platform being outside of a set parameter, wherein the comparator is configured to identify the potential cause based on the report, the sensor data, and the maintenance data.

The illustrative embodiments also provide for a method. The method includes receiving in an associative memory a current health profile of a platform. The associative memory comprises a plurality of data and a plurality of associations among the plurality of data. The plurality of data and their associations are collected into associated groups. The associative memory is configured to be queried based on at least indirect relationships among the plurality of data. The associative memory also stores a plurality of known health profiles for a platform. The method also includes comparing, using a computer system in conjunction with the associative memory, the current health profile with the plurality of known health profiles to generate a comparison. The method also includes generating, based on the comparison and using the computer system in conjunction with the associative memory, a report on a current health of the platform.

The current health profile may comprise sensor data obtained from a sensor disposed on the platform. The platform may comprise a vehicle. The current health profile may further comprise maintenance data obtained from maintenance records derived from on-ground maintenance of the vehicle. The current health profile may further comprise a record of an observation of the vehicle observed by a human.

Also disclosed is a system that includes an associative memory comprising a plurality of data and a plurality of associations among the plurality of data. The plurality of data and their associations are collected into associated groups. The associative memory is configured to be queried based on at least indirect relationships among the plurality of data. The associative memory also stores a plurality of known health profiles for a platform. The system includes an input device in communication with the associative memory. The input device is configured to receive sensor data relating to measurements taken by a sensor disposed on the platform. The input device is further configured to receive maintenance data relating to maintenance of the platform. The maintenance data is distinct from and unrelated to the sensor data. The system also includes a comparator configured to use both the sensor data and the maintenance data in conjunction with the associative memory to generate a report of a health of the platform.

The features, functions, and advantages can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives, and advantages thereof, will best be understood by reference to the following detailed description of an illustrative embodiment of the present disclosure when read in conjunction with the accompanying drawings, wherein:
**Figure 1** is an illustration of a platform manufacturing and service method in accordance with an illustrative embodiment;
**Figure 2** is an illustration of an aircraft systems in which an illustrative embodiment may be implemented;
**Figure 3** is an illustration of a health monitoring environment using an associative memory in accordance with an illustrative embodiment;
**Figure 4** is an illustration of a data processing system in accordance with an illustrative embodiment;
**Figure 5** is an illustration of a flow of information in a computer system for a health monitoring system in accordance with an illustrative embodiment;
**Figure 6** is an illustration of a plurality of observations in accordance with an illustrative embodiment;
**Figure 7** is an illustration of a flowchart of a process for monitoring a platform in accordance with an illustrative embodiment;
**Figure 8** is an illustration of a flowchart for creating a profile in accordance with an illustrative embodiment;
**Figure 9** is an illustration of a flowchart for creating scores for observations in accordance with an illustrative embodiment;
**Figure 10** is an illustration of a flowchart of a process for creating known profiles in accordance with an illustrative embodiment;
**Figure 11** is a block diagram of a health monitoring system in accordance with an illustrative embodiment.
**Figure 12** is a flowchart of a process for monitoring a platform, in accordance with an illustrative embodiment;
**Figure 13** is a block diagram illustrating use of similarity engine, in accordance with an illustrative embodiment;
**Figure 14** is an illustration of a plurality of observations, in accordance with an illustrative embodiment;
**Figure 15** is a block diagram of a health monitoring environment using an associative memory in accordance with an illustrative embodiment; and
**Figure 16** is a flowchart of a process for monitoring a platform, in accordance with an illustrative embodiment.

### DETAILED DESCRIPTION

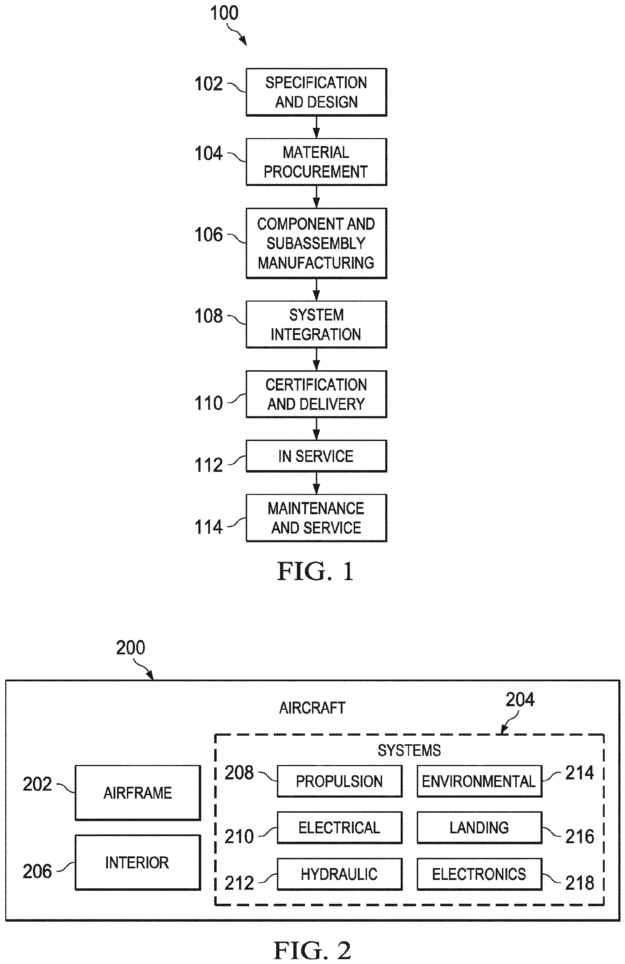

Referring more particularly to the drawings, embodiments of the disclosure may be described in the context of aircraft manufacturing and service method **100** as shown in **Figure 1** and aircraft **200** as shown in **Figure 2****.** Turning first to **Figure 1****,** an illustration of an aircraft manufacturing and service method is depicted in accordance with an illustrative embodiment. During pre-production, aircraft manufacturing and service method **100** may include specification and design **102** of aircraft **200** in **Figure 2** and material procurement **104.**

During production, component and subassembly manufacturing **106** and system integration **108** of aircraft **200** in **Figure 2** takes place. Thereafter, aircraft **200** in **Figure 2** may go through certification and delivery **110** in order to be placed in service **112.** While in service **112** by a customer, aircraft **200** in **Figure 2** is scheduled for routine maintenance and service **114,** which may include modification, reconfiguration, refurbishment, and other maintenance or service.

Each of the processes of aircraft manufacturing and service method **100** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of venders, subcontractors, and suppliers; and an operator may be an airline, leasing company, military entity, service organization, and so on.

With reference now to **Figure 2****,** an illustration of an aircraft is depicted in which an illustrative embodiment may be implemented. In this example, aircraft **200** is produced by aircraft manufacturing and service method **100** in **Figure 1** and may include airframe **202** with plurality of systems **204** and interior **206.** Examples of systems **204** include one or more of propulsion system **208,** electrical system **210,** hydraulic system **212,** environmental system **214,** landing system **216,** and electronics system **218.** Any number of other systems may be included. Although an aerospace example is shown, different illustrative embodiments may be applied to other industries, such as the automotive industry.

Apparatus and methods embodied herein may be employed during at least one of the stages of aircraft manufacturing and service method **100** in **Figure 1****.** As used herein, the phrase "at least one of", when used with a list of items, means that different combinations of one or more of the listed items may be used and only one of each item in the list may be needed. For example, "at least one of item A, item B, and item C" may include, for example, without limitation, item A or item A and item B. This example also may include item A, item B, and item C or item B and item C.

In one illustrative example, components or subassemblies produced in component and subassembly manufacturing **106** in **Figure 1** may be fabricated or manufactured in a manner similar to components or subassemblies produced while aircraft **200** is in service **112** in **Figure 1****.** As yet another example, a number of apparatus embodiments, method embodiments, or a combination thereof may be utilized during production stages, such as component and subassembly manufacturing **106** and system integration **108** in **Figure 1****.**

A number, when referring to items, means one or more items. For example, a number of apparatus embodiments is one or more apparatus embodiments. A number of apparatus embodiments, method embodiments, or a combination thereof may be utilized while aircraft **200** is in service **112** and/or during maintenance and service **114** in **Figure 1****.** The use of a number of the different illustrative embodiments may substantially expedite the assembly of and/or reduce the cost of aircraft **200.**

As used herein, the term "associative memory" refers to a plurality of data and a plurality of associations among the plurality of data, which may be derived by associative memory entity analytics. The plurality of data and the plurality of associations may be collected in associated groups and stored in a non-transitory computer readable storage medium. The associative memory may be configured to be queried based on at least indirect relationships among the plurality of data in addition to direct correlations among the plurality of data. The associative memory may also be configured to be queried based on direct relationships, as well as combinations of direct and indirect relationships. Thus, an associative memory is not just storage; an associative memory includes the capability of computing similarities or associations among data elements.

Thus, an associative memory may be characterized as a plurality of data and a plurality of associations among the plurality of data. The plurality of data may be collected into associated groups.
Further, the associative memory may be configured to be queried based on at least one relationship, selected from a group that includes direct and indirect relationships, or from among the plurality of data in addition to direct correlations among the plurality of data. An associative memory may also take the form of software. Thus, an associative memory also may be considered a process by which information is collected into associated groups in the interest of gaining new insight based on relationships rather than direct correlation. The software may be implemented by a hardware computer, or the hardware computer may be configured to carry out the process.

In these illustrative examples, a health monitoring system may be implemented in aircraft **200** during system integration **108** or maintenance and service **114** of **Figure 1****.** A health monitoring system, in accordance with an illustrative embodiment, may be used while in service **112** and/or during maintenance and service **114** in **Figure 1****.**

The different illustrative embodiments recognize and take into account a number of considerations. For example, the different illustrative embodiments recognize and take into account that in currently used health monitoring systems, the sensor data used to identify the condition of a component is often assigned by the designers of the health monitoring system.

The different illustrative embodiments recognize and take into account that this type of use of sensor data may not take into account other data that may affect a particular component. For example, changes or vibrations in a first system connected to a second system also may affect that second system. The different illustrative embodiments recognize and take into account that currently available health monitoring systems do not take into account all of the different systems or structures in the vehicle that may affect the system being monitored.

The different illustrative embodiments recognize and take into account that various types of analysis may be used to take into account additional data. For example, statistical analysis, data monitoring, signal processing, rule-based systems, fuzzy logic, genetic algorithms, Monte Carlo simulations, and/or other types of processes may be used. These different potential solutions, however, do not provide the desired results. With data monitoring, these types of processes are time consuming and costly in terms of software maintenance costs to update models, statistics, rules, fuzzy logic, genetic algorithms and simulation as well as being costly with respect to processor resources.

These different processes also may not provide the desired level of accuracy with respect to identifying the state of different systems within a platform. For example, with statistical analysis, assumptions are based on large numbers of samples that are often not available. Further, statistical analysis reduces the amount of information collected to a smaller set of parameters. With complex systems, the assumptions made for this type of analysis and the processing techniques used may not model the system with the amount of desired accuracy.

As another example, with signal processing, data is relied on from a number of sensors for a particular component. These values are compared with a threshold to make identifications. This type of technique does not take into account other types of conditions that may occur in the vehicle.

With rule-based systems, the different interactions between components in a vehicle may be difficult to identify and take into account.

Genetic algorithms may require more time than desired to obtain a proper configuration to identify the health of a vehicle. Monte Carlo simulations involve assumptions from random generators and statistics that may not be indicative of real world conditions.

The different illustrative embodiments recognize and take into account that a solution that takes into account sufficient data to more accurately identify the state of the vehicle is desirable. Thus, the different illustrative embodiments provide a method and apparatus for managing the health of a platform. In one illustrative embodiment, an apparatus comprises a computer system and a sensor network. The sensor network is associated with a platform. The computer system is connected to the sensor network and is configured to receive information from the sensor network. The computer system is configured to form observations from the information for a current profile. The computer system compares the current profile with a number of known profiles to identify a health state of the platform.

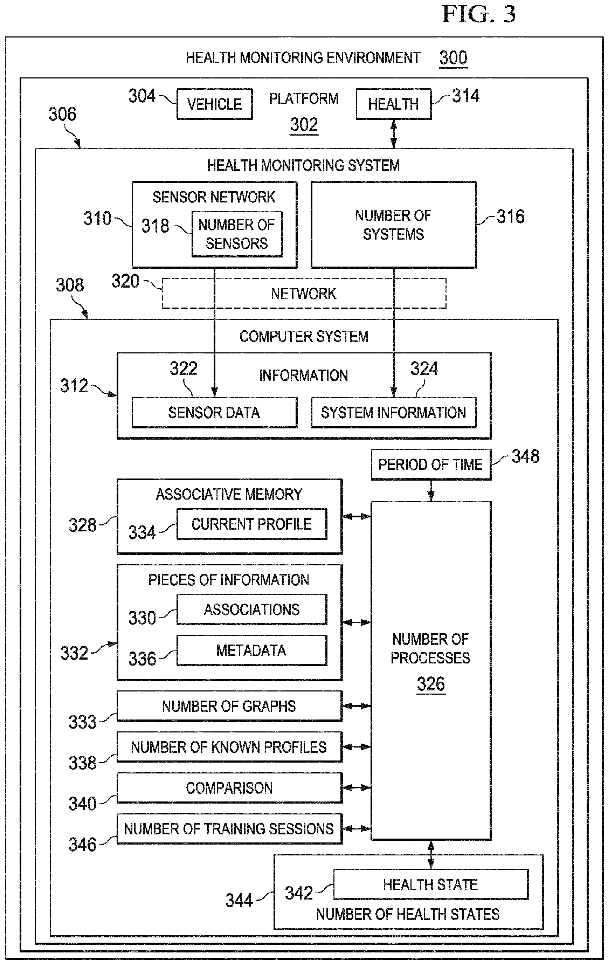

With reference now to **Figure 3****,** an illustration of a health monitoring environment using an associative memory is depicted in accordance with an illustrative embodiment. Health monitoring environment **300** may be implemented using platform **302**. As illustrated, platform **302** takes the form of vehicle **304**. Vehicle **304** may be implemented using aircraft **200** in **Figure 2****.**

As illustrated, health monitoring system **306** is associated with platform **302.** A first component may considered to be associated with a second component by being secured to the second component, bonded to the second component, fastened to the second component, and/or connected to the second component in some other suitable manner. The first component also may be connected to the second component through using a third component. The first component also may be considered to be associated with the second component by being formed as part of and/or as an extension of the second component.

In these examples, health monitoring system **306** is comprised of computer system **308** and sensor network **310.** Computer system **308** may include one or more computers that may be in communication with each other. Computer system **308** is configured to perform a number of operations in these illustrative examples. Computer system **308** receives at least a portion of information **312** from sensor network **310** to monitor health **314** of platform **302.** Information **312** also may be received from number of systems **316** associated with platform **302**.

In these illustrative examples, sensor network **310** comprises number of sensors **318** connected to network **320.** Network **320**, in turn, is connected to computer system **308** in these examples. Number of sensors **318** generates sensor data **322** in information **312**. A sensor within number of sensors **318** is a device that measures a physical quantity and converts that measurement into a signal. This signal may be an analog signal or a digital signal, depending on the particular implementation. This signal forms a part of sensor data **322**.

Number of sensors **318** may comprise a number of different types of sensors. For example, without limitation, number of sensors **318** may comprise at least one of, an accelerometer, a strain gauge, a fiber optics sensor, a carbon dioxide sensor, a catalytic bead sensor, an oxygen sensor, a current sensor, a volt meter, an airflow sensor, a mask flow sensor, a hygrometer, a particle detector, an altimeter, a gyroscope, a microphone, a yaw rate sensor, and/or some other suitable type of device.

In some illustrative examples, "at least one of" may be, for example, without limitation, two of item A, one of item B, and ten of item C; four of item B and seven of item C; and/or other suitable combinations.

Number of systems **316** may include, for example, without limitation, computers, avionics, a propulsion system, an environmental system, a hydraulic system, a maintenance system, and/or other suitable types of systems. Number of systems **316** generates system information **324**, which may be used by health monitoring system **306**. In these illustrative examples, system information **324** may include data, commands, logs, messages, and/or other suitable types of information that may be generated by number of sensors **318** and number of systems **316**.

In this illustrative example, computer system **308** runs number of processes **326** to process information **312** and identify association for placement into associative memory **328**. Computer system **308** uses associative memory **328** to form current profile **334**. For example, number of processes **326** may form associations **330** between pieces of information **332** to form number of graphs **333** and/or current profile **334**. In these illustrative examples, current profile **334** is used to model a current health **314** of platform **302**. Current profile **334** may change as information **312** received by computer system **308** changes. In this depicted example, current profile **334** is in associative memory **328**.

Never before has the above-described associative memory **328** been applied to vehicle health monitoring. As defined above, associative memory **328** is more than just a stored collection of data. Associative memory **328** also derives and includes relationships, including direct relationships and indirect relationships, that may also be searched and/or compared. Thus, associative memory **328** is software or hardware, or both, that may be used to compare the underlying data and these relationships. Associative memory **328** allows for far greater capabilities than previous monitoring and reporting systems for vehicle health management.

For example, the illustrative embodiments, through use of associative memory **328**, may take advantage of a diverse set of data from dedicated sensors, related systems, flight systems, reliability or maintainability analysis, and maintenance and operation management systems. Furthermore, associative memory **328** may analyze combinations of data having various formats, from numerical to textual to audio to visual. Associative memory **328** may analyze, or may be used to efficiently analyze, relationships among all these different types of data to produce an advanced vehicle health monitoring system that greatly improves on existing vehicle health monitoring systems.

For example, existing vehicle health monitoring systems are incapable of incorporating maintenance data related to a wing along with real time sensor data related to that wing to generate a health report that takes into account both forms of information. The illustrative embodiments can perform this type of assessment. In another example, current health monitoring systems cannot efficiently combine and process a large set of measured data without impacting the throughput of the system.

Furthermore, associative memory **328** may develop and store profiles that reflect various health conditions of a platform. For example, one memory profile can represent a healthy system, a second memory profile may represent the same system that may be inspected, and a third memory profile may represent the same system for which corrective action may be desirable. The illustrative embodiments may incorporate all of these profiles and analyze relationships among them, along with other data and their relationships, to generate a health maintenance report, either as a real time report or as a historical report. A real time report may be generated by comparing a current health profile for a vehicle based on real time sensor data to one or more known profiles already stored in associative memory **328.**

In processing information **312,** number of processes **326** may associate or add metadata **336** to pieces of information **332.** Metadata **336** may be used to create associations **330** between pieces of information **332.** In these illustrative examples, metadata **336** may be comprised of at least one of timestamps for pieces of information **332** and identifiers of sources of pieces of information **332.**

Current profile **334** may then be compared to number of known profiles **338** to form comparison **340.** Comparison **340** is used to identify health state **342** for platform **302.** Health state **342** identifies health **314** for platform **302.** Health state **342** may be selected from number of health states **344** for number of known profiles **338.** In these illustrative examples, number of health states **344** may include, for example, without limitation, new, operational, healthy, degraded, needs repair, repaired, and/or other suitable states.

In these illustrative examples, number of known profiles **338** may be created through number of training sessions **346** using platform data **302.** For example, in one training session in number of training sessions **346,** all of information **312** received by health monitoring system **306** over period of time **348** may be identified as being for a particular health state within number of health states **344.** For example, health state **342** may be "new" for period of time **348.** Other profiles for number of known profiles **338** may be generated for other periods of time during number of training sessions **346.**

The amount of information **312** collected may vary, depending on the particular implementation. For example, information **312** may be collected in a continuous manner, a uniform manner, a discontinuous manner, or a non-uniform manner. The information may be collected for a number of minutes, hours, days, or some other suitable period of time. Number of training sessions **346** may be performed for different known states of platform **302.** Number of training sessions **346** may be performed specifically for platform **302** such that number of known profiles **338** accurately reflects different health states for platform **302.**

In this manner, health monitoring system **306** may increase the availability of platform **302** as compared to currently used health monitoring systems. Comparison **340** of current profile **334** to number of known profiles **338** may be performed each time a piece of information is received by health monitoring system **306.**

As yet another example, although platform **302** takes the form of vehicle **304** in these examples, platform **302** may take other forms. For example, platform **302** may be only a portion of vehicle **304.** For example, platform **302** may be a propulsion system, a shaft, or some other part of vehicle **304.**

The illustration of health monitoring environment **300** in **Figure 3** is not meant to imply physical or architectural limitations to the manner in which different illustrative embodiments may be implemented. Other components in addition to and/or in place of the ones illustrated may be used. Some components may be unnecessary in some illustrative embodiments. Also, the blocks are presented to illustrate some functional components. One or more of these blocks may be combined and/or divided into different blocks when implemented in different illustrative embodiments.

For example, in some illustrative embodiments, health monitoring system **306** may only receive information **312** from sensor network **310** and may not receive information **312** from number of systems **316.** In yet other illustrative embodiments, multiple health monitoring systems may be present to monitor different portions of platform **302.**

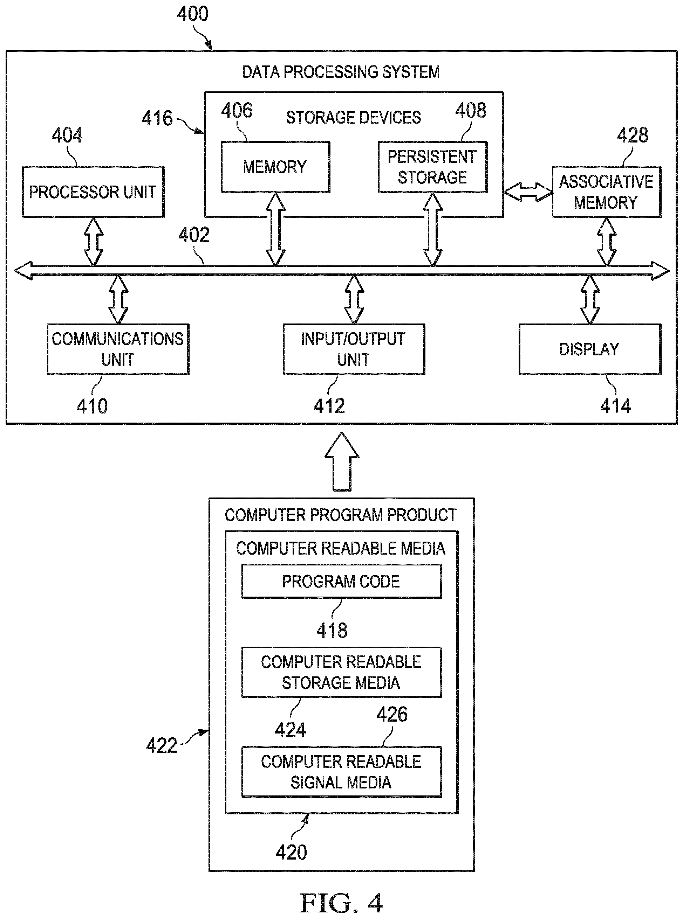

Turning now to **Figure 4****,** an illustration of a data processing system is depicted in accordance with an illustrative embodiment. Data processing system **400** in **Figure 4** is an example of a data processing system that may be used to implement the illustrative embodiments, such as system **300** of **Figure 1****,** or any other module or system or process disclosed herein. In this illustrative example, data processing system **400** includes communications fabric **402,** which provides communications between processor unit **404,** memory **406,** persistent storage **408,** communications unit **410,** input/output (I/O) unit **412,** and display **414.**

Processor unit **404** serves to execute instructions for software that may be loaded into memory **406.** Processor unit **404** may be a number of processors, a multi-processor core, or some other type of processor, depending on the particular implementation. A number, as used herein with reference to an item, means one or more items. Further, processor unit **404** may be implemented using a number of heterogeneous processor systems in which a main processor is present with secondary processors on a single chip. As another illustrative example, processor unit **404** may be a symmetric multi-processor system containing multiple processors of the same type.

Memory **406** and persistent storage **408** are examples of storage devices **416.** A storage device is any piece of hardware that is capable of storing information, such as, for example, without limitation, data, program code in functional form, and/or other suitable information either on a temporary basis and/or a permanent basis. Storage devices **416** may also be referred to as computer readable storage devices in these examples. Memory **406,** in these examples, may be, for example, a random access memory or any other suitable volatile or non-volatile storage device. Persistent storage **408** may take various forms, depending on the particular implementation.

For example, persistent storage **408** may contain one or more components or devices. For example, persistent storage **408** may be a hard drive, a flash memory, a rewritable optical disk, a rewritable magnetic tape, or some combination of the above. The media used by persistent storage **408** also may be removable. For example, a removable hard drive may be used for persistent storage **408.**

Communications unit **410,** in these examples, provides for communications with other data processing systems or devices. In these examples, communications unit **410** is a network interface card. Communications unit **410** may provide communications through the use of either or both physical and wireless communications links.

Input/output (I/O) unit **412** allows for input and output of data with other devices that may be connected to data processing system **400.** For example, input/output (I/O) unit **412** may provide a connection for user input through a keyboard, a mouse, wireless transceiver, memory device, serial wired port (USB, Ethernet) and/or some other suitable input device. Further, input/output (I/O) unit **412** may send output to a printer. Display **414** provides a mechanism to display information to a user.

Instructions for the operating system, applications, and/or programs may be located in storage devices **416,** which are in communication with processor unit **404** through communications fabric **402.** In these illustrative examples, the instructions are in a functional form on persistent storage **408.** These instructions may be loaded into memory **406** for execution by processor unit **404.** The processes of the different embodiments may be performed by processor unit **404** using computer implemented instructions, which may be located in a memory, such as memory **406.**

These instructions are referred to as program code, computer usable program code, or computer readable program code that may be read and executed by a processor in processor unit **404.** The program code in the different embodiments may be embodied on different physical or computer readable storage media, such as memory **406** or persistent storage **408.**

Program code **418** is located in a functional form on computer readable media **420** that is selectively removable and may be loaded onto or transferred to data processing system **400** for execution by processor unit **404.** Program code **418** and computer readable media **420** form computer program product **422** in these examples. In one example, computer readable media **420** may be computer readable storage media **424** or computer readable signal media **426.** Computer readable storage media **424** may include, for example, an optical or magnetic disk that is inserted or placed into a drive or other device that is part of persistent storage **408** for transfer onto a storage device, such as a hard drive, that is part of persistent storage **408.** Computer readable storage media **424** also may take the form of a persistent storage, such as a hard drive, a thumb drive, or a flash memory, that is connected to data processing system **400.** In some instances, computer readable storage media **424** may not be removable from data processing system **400.**

Alternatively, program code **418** may be transferred to data processing system **400** using computer readable signal media **426.** Computer readable signal media **426** may be, for example, a propagated data signal containing program code **418.** For example, computer readable signal media **426** may be an electromagnetic signal, an optical signal, and/or any other suitable type of signal. These signals may be transmitted over communications links, such as wireless communications links, optical fiber cable, coaxial cable, a wire, and/or any other suitable type of communications link. In other words, the communications link and/or the connection may be physical or wireless in the illustrative examples.

In some illustrative embodiments, program code **418** may be downloaded over a network to persistent storage **408** from another device or data processing system through computer readable signal media **426** for use within data processing system **400.** For instance, program code stored in a computer readable storage medium in a server data processing system may be downloaded over a network from the server to data processing system **400.** The data processing system providing program code **418** may be a server computer, a client computer, or some other device capable of storing and transmitting program code **418.**

The different components illustrated for data processing system **400** are not meant to provide architectural limitations to the manner in which different embodiments may be implemented. The different illustrative embodiments may be implemented in a data processing system including components in addition to or in place of those illustrated for data processing system **400.** Other components shown in **Figure 4** can be varied from the illustrative examples shown. The different embodiments may be implemented using any hardware device or system capable of running program code. As one example, the data processing system may include organic components integrated with inorganic components and/or may be comprised entirely of organic components excluding a human being. For example, a storage device may be comprised of an organic semiconductor.

In another illustrative example, processor unit **404** may take the form of a hardware unit that has circuits that are manufactured or configured for a particular use. This type of hardware may perform operations without needing program code to be loaded into a memory from a storage device to be configured to perform the operations.

For example, when processor unit **404** takes the form of a hardware unit, processor unit **404** may be a circuit system, an application specific integrated circuit (ASIC), a programmable logic device, or some other suitable type of hardware configured to perform a number of operations. With a programmable logic device, the device is configured to perform the number of operations. The device may be reconfigured at a later time or may be permanently configured to perform the number of operations. Examples of programmable logic devices include, for example, a programmable logic array, programmable array logic, a field programmable logic array, a field programmable gate array, and other suitable hardware devices. With this type of implementation, program code **418** may be omitted because the processes for the different embodiments are implemented in a hardware unit.

In still another illustrative example, processor unit **404** may be implemented using a combination of processors found in computers and hardware units. Processor unit **404** may have a number of hardware units and a number of processors that are configured to run program code **418.** With this depicted example, some of the processes may be implemented in the number of hardware units, while other processes may be implemented in the number of processors.

As another example, a storage device in data processing system **400** is any hardware apparatus that may store data. Memory **406,** persistent storage **408,** and computer readable media **420** are examples of storage devices in a tangible form.

In another example, a bus system may be used to implement communications fabric **402** and may be comprised of one or more buses, such as a system bus or an input/output bus. Of course, the bus system may be implemented using any suitable type of architecture that provides for a transfer of data between different components or devices attached to the bus system. Additionally, a communications unit may include one or more devices used to transmit and receive data, such as a modem or a network adapter. Further, a memory may be, for example, memory **406,** or a cache, such as found in an interface and memory controller hub that may be present in communications fabric **402.**

Data processing system **400** may also include associative memory **428.** Associative memory **428** may be associative memory **328** of **Figure 3** and may have the properties described elsewhere herein. Associative memory **428** may be in communication with communications fabric **402.** Associative memory **428** may also be in communication with, or in some illustrative embodiments, be considered part of storage devices **416,** or processor **404.** While associative memory **428** is shown, additional associative memories may be present.

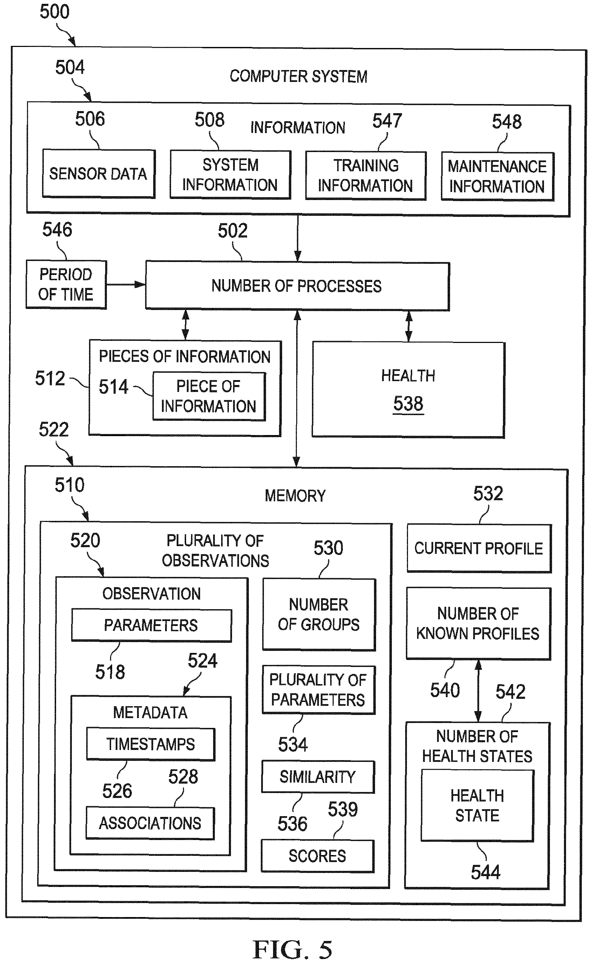

Turning now to **Figure 5****,** an illustration of a flow of information in a computer system for a health monitoring system is depicted in accordance with an illustrative embodiment. In this illustrative example, computer system **500** may include one or more computers that may be implemented using data processing system **400 in** **Figure 4****.**

In this illustrative example, number of processes **502** runs on computer system **500.** Number of processes **502** receives information **504** in the form of at least one of sensor data **506** and system information **508.** Number of processes **502** forms plurality of observations **510** using at least one of sensor data **506** and system information **508.**

For example, number of processes **502** identifies pieces of information **512** within information **504.** Piece of information **514** within pieces of information **512** may be identified based on when piece of information **514** was received. All information within piece of information **514** may be placed into parameters **518** for observation **520.** Parameters **518** are variables filled with information from piece of information **514.** Each parameter in parameters **518** may be a variable in which a value or text may be placed.

When parameters **518** are filled using piece of information **514**, observation **520** in plurality of observations **510** is formed. Observation **520** is stored in plurality of observations **510** in memory **522**.

Further, metadata **524** also may be included in observation **520**. Metadata **524** may be, for example, without limitation, timestamps **526**. In these illustrative examples, metadata **524** also may include associations **528**. Associations **528** may be used to create associations between plurality of observations **510**. Number of groups **530** is formed by plurality of observations **510** that are associated to each other based on similarities between plurality of observations **510**. In these illustrative examples, when plurality of observations **510** are grouped into number of groups **530**, current profile **532** is formed.

In these illustrative examples, plurality of observations **510** may be grouped into number of groups **530** based on a similarity of observations within plurality of observations **510** with each other. For example, parameters **518** in observation **520** may be compared with plurality of parameters **534** for other observations in plurality of observations **510**. Based on this comparison, similarity **536** may be identified between observation **520** and other observations within plurality of observations **510.** Scores **539** may be assigned to the other observations in plurality of observations **510**.

Thereafter, scores **539** may be used to determine whether an association should be formed between observation **520** and each of the other observations in plurality of observations **510**. This process may be performed for all of the other observations in plurality of observations **510.**

Current profile **532** may be used to identify health **538** of a platform. For example, current profile **532** may be compared to number of known profiles **540.** In these illustrative examples, each profile within number of known profiles **540** corresponds to number of health states **542** for the platform. A match with a profile in number of known profiles **540** or a closest match to a profile within number of known profiles **540** may be used to identify health state **544** within number of health states **542** for the platform. Health state **544** indicates health **538** of the platform.

Additionally, number of processes **502** may be run to create number of known profiles **540.** For example, information **504** received during period of time **546** may be training information **547** for the platform during a particular health state. Number of processes **502** may be run for other periods of time to identify other known profiles.

Further, number of processes **502** may be run using a history of information **504** instead of during the collection of information **504** to create number of known profiles **540.** Training information **547** may be identified using timestamps **526.** Training information **547** is comprised of information previously collected. In some examples, timestamps **526** may be included in training information **547.**

In addition, maintenance information **548** also may be used in creating number of known profiles **540.** In some illustrative embodiments, maintenance information **548** may be a portion of training information **547.** Maintenance information **548** may include information about a number of maintenance events. For example, maintenance information **548** may indicate when inspections occurred, new components are added, when repairs are made, when replacements are made, and/or other suitable information. This information may be used to identify an improperly installed part or an incorrect part.

Further, in some illustrative embodiments, computer system **500** selects a portion of plurality of observations **510** based on maintenance information **548**. Computer system **500** selects the portion using the number of maintenance events and/or metadata. The metadata may comprise at least one of a timestamp for a piece of information and an identifier of a source of the piece of information. Current profile **532** may be created from the portion of plurality of observations **510** in these examples.

As a specific example, plurality of observations **510** may be formed based on information **504** for a landing system of an aircraft. Maintenance information **548** may indicate that a part of the landing system was replaced during the formation of plurality of observations **510**. Maintenance information **548** and metadata **524** may be used to select the portion of plurality of observations **510** that was formed after the replacement of the part. The selected portion may then be used to create current profile **532**.

The illustration of computer system **500** in **Figure 5** is not meant to imply physical or architectural limitations to the manner in which different illustrative embodiments may be implemented. For example, in some illustrative embodiments, number of known profiles **540** may be located in a remote location from computer system **500.** As another example, one process in number of processes **502** may collect information **504** to form current profile **532**. Another process may form associations **528** between plurality of observations **510** to form current profile **532**.

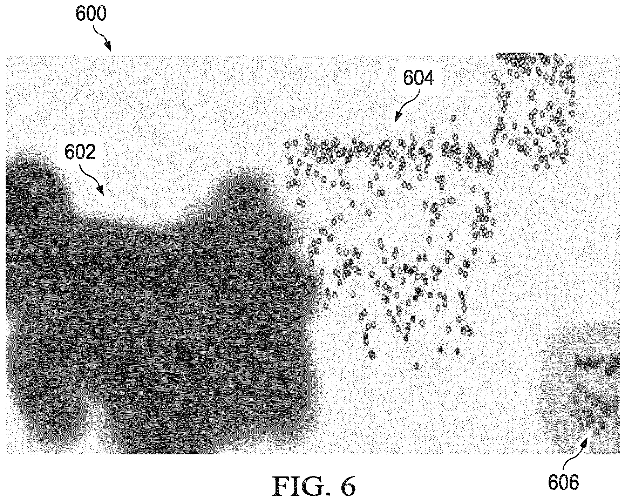

With reference now to **Figure 6****,** an illustration of a plurality of observations is depicted in accordance with an illustrative embodiment. Plurality of observations **600** is an example of one implementation of plurality of observations **510** in **Figure 5****.** Plurality of observations **600** comprise parameters for monitoring the health of a platform.

In this illustrative example, plurality of observations **600** may comprise observations that are formed based on information, such as information **504** in **Figure 5****.** As depicted, plurality of observations **600** are grouped into group **602**, group **604**, and group **606**. Each of these groups comprises observations within plurality of observations **600** having a similarity.

Further, each of groups **602, 604,** and **606** correspond to a health state. In this illustrative example, observations in group **602** correspond to a "degraded" health state. Observations in group **604** correspond to a "needs repair" health state. In some examples, the "needs repair" health state also may be referred to as a "faulty" health state. Observations in group **606** correspond to a "repaired" health state. In some examples, a "repaired" health state also may be referred to as a "healthy" state.

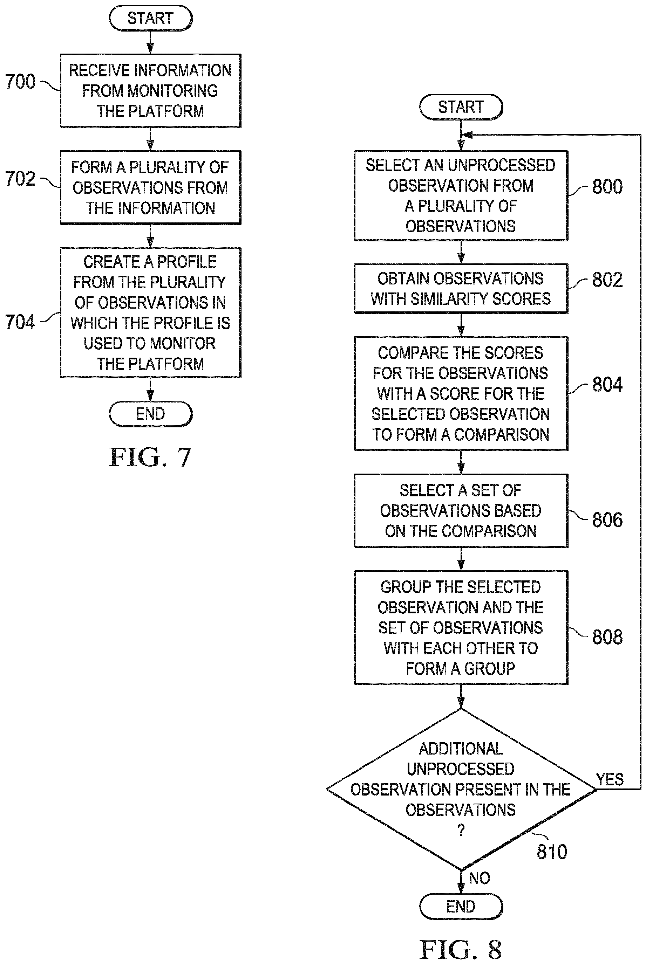

With reference now to **Figure 7****,** an illustration of a flowchart of a process for monitoring a platform is depicted in accordance with an illustrative embodiment. The process in **Figure 7** may be implemented in health monitoring system **306** in health monitoring environment **300** in **Figure 3****.**

The process begins by receiving information from monitoring the platform (operation **700**). The monitoring of the platform may be performed by receiving information from a sensor network associated with the platform. This monitoring also may occur by receiving information from a number of systems on the platform.

The process then forms a plurality of observations from the information (operation **702**). These observations may be formed by identifying pieces of information in the information received. An observation is created from each piece of information to form the plurality of observations. In these illustrative examples, a piece of information may be identified as a piece of information at a particular time or within a particular period of time. The different values or text in the piece of information may be placed into parameters for an observation.

The process then creates a profile from the plurality of observations in which the profile is used to monitor the platform (operation **704**), with the process terminating thereafter. The creation of the profile may be performed in a number of different ways. For example, the formation of the profile may occur by placing the plurality of observations in a memory. In other illustrative embodiments, the profile may be created when groupings of the plurality of observations are made.

The profile created in **Figure 7** may be a current profile when the information is collected during operation of the platform and analyzed to identify a health state for the profile. This health state may be used to indicate the health of the platform. In other illustrative embodiments, the profile may be a known profile that is created for use in monitoring a platform. When the profile is a known profile, the information also may include maintenance information.

With reference now to **Figure 8****,** an illustration of a flowchart for creating a profile is depicted in accordance with an illustrative embodiment. The process illustrated in **Figure 8** may be implemented in number of processes **326** in **Figure 3** or number of processes **502** in **Figure 5****.**

The process begins by selecting an unprocessed observation from a plurality of observations (operation **800**). The process then obtains observations with similarity scores (operation **802**). In operation **802**, these observations are observations other than the selected observation. In this illustrative example, these scores identify a similarity of the observations to the selected observation.

The process then compares the scores for the observations with a score for the selected observation to form a comparison (operation **804**). A set of observations is selected based on the comparison (operation **806**). In these illustrative examples, the set of observations may contain no observations, one observation, or any other number of observations from the observations from which the comparison was made. Next, the selected observation and the set of observations are grouped with each other to form a group (operation **808**).

A determination is made as to whether an additional unprocessed observation is present in the observations (operation **810**). If an additional unprocessed observation is present, the process returns to operation **800** as described above. Otherwise, the process terminates once processing of the observations is completed and the profile has been formed.

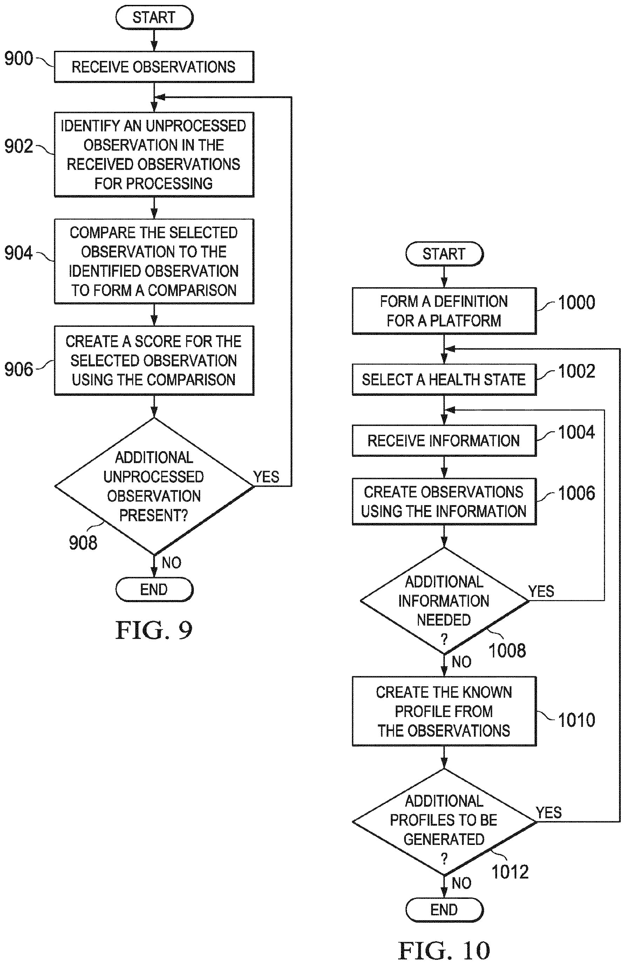

With reference now to **Figure 9****,** an illustration of a flowchart for creating scores for observations is depicted in accordance with an illustrative embodiment. The process illustrated in **Figure 9** is an example of one implementation of operation **802** in **Figure 8****.**

The process begins by receiving observations (operation **900**). These observations are observations for which scores are desired with respect to a selected observation from which a similarity score is desired. The selected observation may be an unprocessed observation selected in operation **800** in **Figure 8****.** The process identifies an unprocessed observation in the received observations for processing (operation **902**). The selected observation is compared to the identified observation to form a comparison (operation **904**).

A score is created for the selected observation using the comparison (operation **906**). A determination is made as to whether an additional unprocessed observation is present in the received observations (operation **908**). If an additional unprocessed observation is present, the process returns to operation **902**. Otherwise, the process terminates.

Turning now to **Figure 10****,** an illustration of a flowchart of a process for creating known profiles is depicted in accordance with an illustrative embodiment. The process illustrated in **Figure 10** may be implemented in health monitoring environment **300** in **Figure 3****.** Further, the process may be implemented within number of processes **326** in **Figure 3****.**

The process begins by forming a definition for a platform (operation **1000**). This platform may be an entire vehicle, a subsystem, a component, or some other suitable portion of a platform. The definition for the platform includes parameters for observations.

The process then selects a health state (operation **1002**). This health state is for the known profile that is to be generated. The process then receives information (operation **1004**). In these examples, operation **1004** may be performed during operation of the platform. In some illustrative embodiments, the information may be a history of information previously collected for the platform. The process then creates observations using the information (operation **1006**).

A determination is then made as to whether additional information is needed (operation **1008**). If additional information is needed, the process returns to operation **1004.** Otherwise, the process creates the known profile from the observations (operation **1010**). A determination is then made as to whether additional profiles are to be generated (operation **1012**). If additional profiles are to be generated, the process returns to operation **1002.** Otherwise, the process terminates.

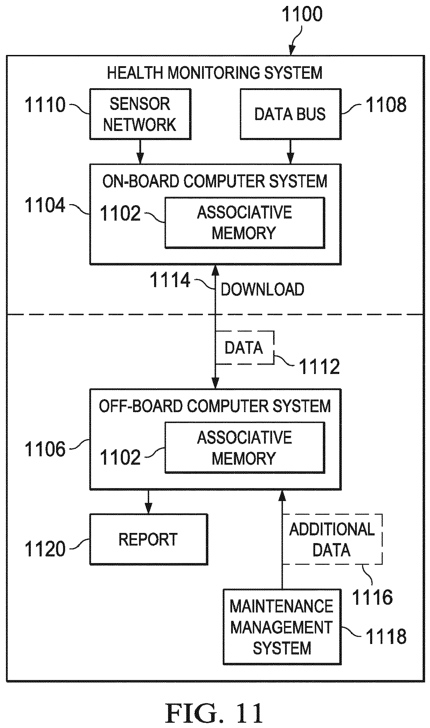

**Figure 11** is a block diagram of a health monitoring system in accordance with an illustrative embodiment. Health monitoring system **1100** may be an example of another illustrative embodiment of health monitoring system **306** of **Figure 3****.** Associative memory **1102** may be associative memory **328** of **Figure 3****,** and as defined above. Health monitoring system **1100** is shown as a combined on-board computer system **1104** and off-board computer system **1106.** However, in different illustrative embodiments health monitoring system **1100** may be either entirely on-board or off-board. Additionally, different components may be either on-board or off-board relative to the configuration shown in **Figure 11****.** As used herein, the term "on-board" means the system is carried entirely on a vehicle and the term "off-board" means the system is carried entirely off of a vehicle. In an illustrative embodiment, the vehicle is an aircraft.

In an illustrative embodiment, health monitoring system **1100** includes on-board computer system **1104** and data bus **1108** for recording directly or indirectly and/or processing information from sensor network **1110.** Sensor network **1110** may be one or more sensors that sense various aspects of the vehicle. For example, one sensor may sense force applied to a wing, another sensor may sense deflection of a wing relative to an axis of the vehicle, another sensor may measure temperature outside the vehicle and/or inside the vehicle, another sensor may measure vibration of vehicle as a whole or of parts of the vehicle, and other parameters. This list of parameters is exemplary only. Thus, sensor network **1110** may include sensors that sense other types of parameters.

On-board computer system **1104** may either record and store data from sensor network **1110,** or may transmit such data in real time or in bursts of data at different times. In any case, in this illustrative embodiment, data **1112** from on-board computer system **1104** is downloaded via transmission link **1114** to off-board computer system **1106.** Data **1112** may be either pushed or pulled, and the term "download" as used herein includes both types of data transmission.

As shown, off-board computer system **1106** includes associative memory **1102.** Associative memory **1102** may be included, in some illustrative embodiments, in on board computer system **1104.** In other illustrative embodiments, associative memory **1102** may be present on both on-board computer system **1104** and off-board computer system **1106.** In the latter example, associative memory **1102** might actually be two different associative memories. In any case, associative memory **1102** may be used to perform, or may itself perform, comparison and analysis of data **1112** and their relations in order to generate report **1120,** which may be a report on the health of the vehicle. This process is further described with respect to **Figure 3** and as described elsewhere herein.

The report generated may include information outside of data **1112.** For example, additional data **1116** from maintenance and management system **1118** may also be entered into associative memory **1102** and then considered together with data **1112** in producing report **1120.** The resulting comparison is more valuable than use of a simple database to generate report **1120,** because associative memory **1102** may be used, or may itself find, relationships among data **1112** and additional data **1116.**

These relationships may identify hidden or difficult to identify issues with respect to the health of the vehicle. This capability may be illustrated by example. A history of maintenance of a fuselage of an aircraft may indicate a predilection for a certain type of inconsistency in a particular aircraft. Data from sensor network may change subtly before the inconsistency arises. As used in this example, "subtly" means that the aircraft still functions within normal parameters and that the aircraft would pass a maintenance inspection if solely the data from the sensor network were analyzed. However, when comparing the maintenance data with the sensor network data, the relationship between the subtle change in data and the maintenance record may indicate that the particular aircraft may desirably be maintenanced before an inconsistency arises. Thus, the report on the particular aircraft's health may include this fact, a fact that simply could not be reported had only sensor data or maintenance data been considered alone. Use of associative memory **1102** provides for this capability, which cannot be provided by existing vehicle health monitoring systems.

In another example, performing maintenance, on or replacement of a part of a vehicle, may cause sensor network **1110** to report data **1112** indicating an inconsistency or undesirable performance. Pre-existing health monitoring systems would therefore report a fault. However, the illustrative embodiments shown in **Figure 3** and **Figure 11** can use associative memory **1102** to combine additional data **1116** from maintenance and management system **1118,** and thereby correctly indicate in report **1120** that the vehicle part is healthy. Thus, the illustrative embodiments may be used to avoid false positives of fault reports that may occur in pre-existing vehicle health monitoring systems.

In yet another example, a crew member could log a report of an observation an inconsistency, which is stored as part of additional data **1116.** This observation may not be sensed, or even be observable, by sensor network **1110.** However, when data **1112** and additional data **1116** are combined by associative memory **1102,** health monitoring system **1100** can accurately provide in report **1120** that maintenance of the appropriate part of the vehicle desirably may be performed. Thus, the illustrative embodiments may be used to avoid false negatives of fault reports that may occur in pre-existing vehicle health monitoring systems.

The above two examples illustrate how the associative memory may be configured to receive and process information about human observations and actions, along with sensor data on the vehicle itself. The health monitoring systems described herein also have other advantages over pre-existing health monitoring systems. For example, the associative memory may be trained by setting up known profiles based on ground data about the health status of the system and related sensor and human entries. In another example, the associative memory may assess the health status of the vehicle by identifying the similarity between a current profile to one or more known profiles. In still another example, the associative memory may assign a health status based on a maximum similarity to a particular pre-existing profile.

While the above examples relate to vehicles, the illustrative embodiments are not limited to vehicles. As described elsewhere herein, the term "vehicle" could be replaced by the term "platform" which may include many different objects, including buildings and many different types of vehicles.

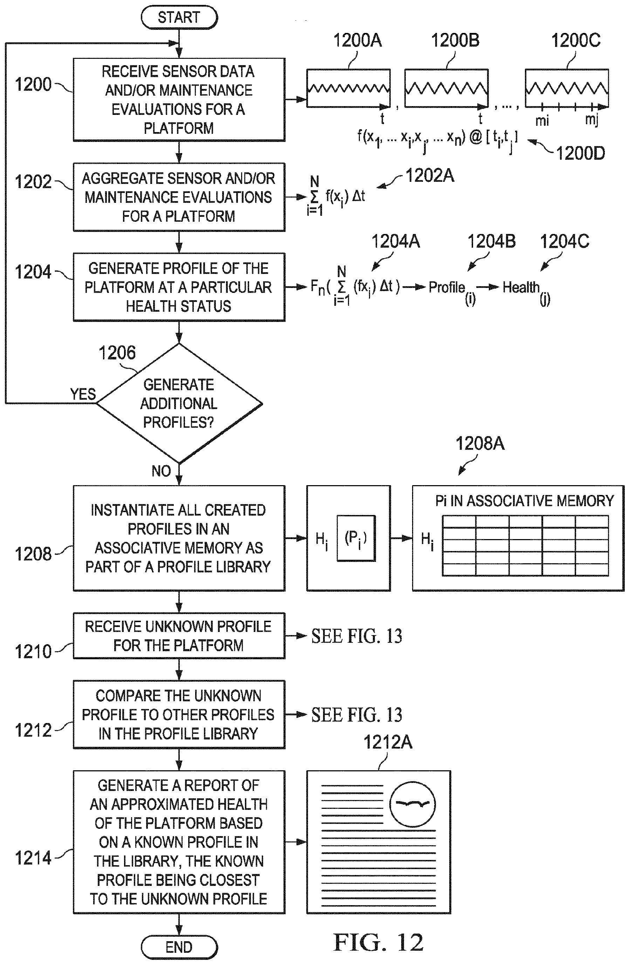

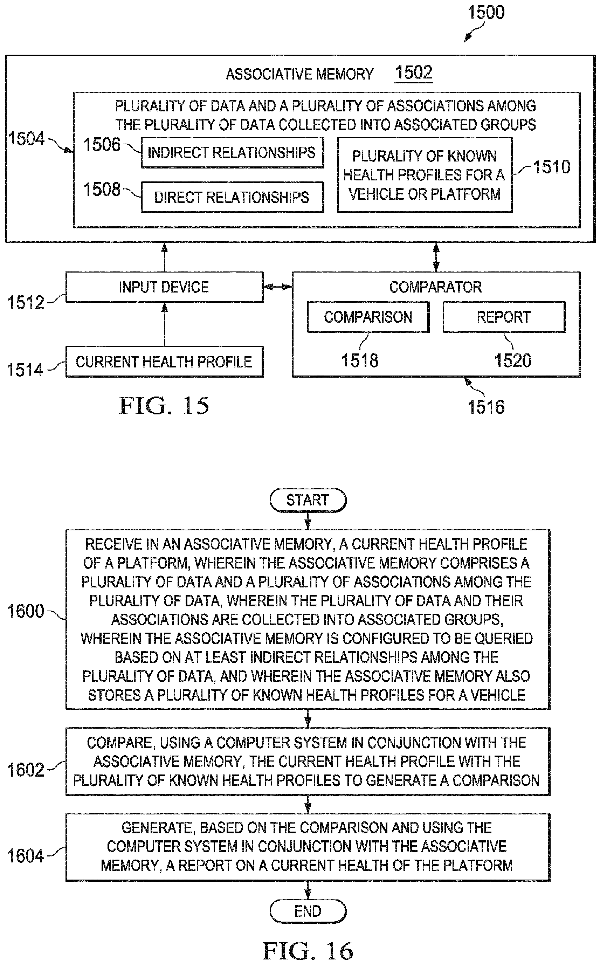

**Figure 12** is a flowchart of a process for monitoring a platform, in accordance with an illustrative embodiment. The process shown in **Figure 12** may be implemented using health monitoring environment **300** of **Figure 3****,** health monitoring system **1100** of **Figure 11****,** or health monitoring environment **1500** of **Figure 15****.** The process shown in **Figure 12** may be a variation of the process shown in **Figure 7** through **Figure 10****,** or **Figure 16****.** The process shown in **Figure 12** may be implemented using an associative memory, such as associative memory **428** of **Figure 4****.** The process shown in **Figure 12** may also be implemented using one or more processors, such as processor unit **404** in **Figure 4****,** possibly operating in conjunction with an associative memory. Although the operations presented in **Figure 12** are described as being performed by "a process," the operations are being performed by at least one tangible processor or using one or more physical devices, as described elsewhere herein. In an illustrative embodiment, the "process" may be an associative memory performing all of the operations shown in **Figure 12****.** Horizontal arrows in **Figure 12** refer to explanatory material for a corresponding operation, and are not part of the flow of operations.

The method begins as the process receives sensor data and/or maintenance evaluations for a platform (operation **1200).** For example, the process may receive one or more sensor data, such as sensor data over time **1200A** from a first sensor and sensor data over time **1200B** from a second sensor. In an illustrative embodiment, maintenance data over time **1200C** may also be received. These data may be expressed as functions, such as function **1200D.**

Thus, in an illustrative embodiment, the received sensor information may be samples from multiple variables X(1),..., X(i), ..., X(n). In addition, maintenance actions may be expressed as MX(1), ..., MX(i), ..., MX(n). These variables may be related by time, t or some other dependent or independent variable creating a state space trajectory over the independent variable. The state space trajectory sometimes can be expressed as a set of functions f(X(1), t(1)) ..., f(X(i), t(i)), ... f(X(n), t(n)) and separately or in combination with the maintenance action variables f(MX(1), t(1)) ..., f(MX(i), t(i)), ... f (MX (n), t(n)).

After receiving sensor and/or maintenance evaluations, the process may aggregate sensor and/or maintenance evaluations for the platform (operation **1202).** This process of aggregation may be represented mathematically by summation statement **1202A.** Thus, in an illustrative embodiment, an aggregate of state space trajectories may be expressed as Σ f(X(i), t(i)) i=1...N and this expression of aggregated sensor data may be accompanied by Σ f(MX(i), t(i)) i=1...N, representing aggregated maintenance data.

After aggregating sensor and/or maintenance evaluations, the process may generate a profile of the platform at a particular health status (operation **1204).** This profile may be expressed mathematically as a function, such as function **1204A.** The profile may be a profile of the platform at a particular time, and thus is one of many profiles for the platform, and may be expressed as Profile(i), as shown at expression **1204B.** This profile may be associated with a particular evaluated health of the platform, and may be expressed as "Health (j)" as shown at expression **1204C.**

Thus, in a functional form, a profile may also be expressed as a function Fn (Σ f(X(i), t(i)) X Σ f(MX(i), t(i))) → Profile (i) . The term "X" in this expression represents the functional cross products between the sensor state space trajectories and the maintenance actions state space trajectories. In turn the function Fn (Σ f(X(i), t(i)) X Σ f(MX(i), t(i))) → Profile(i)is in a one-to-one symmetric functional relationship with ←→ Health Assessment (i) .

Optionally, after generation of a profile at operation **1204,** the process may determine whether additional profiles are to be generated (operation **1206**). If other profiles are to be generated, then the process returns to operation **1200.** If other profiles are not to be generated, then the process continues. In some illustrative embodiments, generation of additional profiles may have already been performed and are already available for instantiation in the associative memory. Likewise, additional profiles may already be instantiated in the associative memory for later use, such as at later operations **1210, 1212,** and **1214.**

Assuming no further profiles are to be generated, the process instantiates all created profiles in an associative memory as part of a profile library (operation **1208**). In some cases, the profile library may be considered complete prior to initiation of the method, in which case all of operations **1200** through **1208** may be considered optional.

As illustrated by expression **1208A**, the multiple Health Assessment H(i) ←→ Profile(i) as specified by the function Fn (Σ f(X(i), t(i)) X Σ f(MX(i), t(i))) (expression 1) may be instantiated in an associative memory. The instantiated health assessment, or profile, in the associative memory may contain the correlates of all sensor state space trajectories and maintenance state space trajectories that correspond to all known observations, both of sensors on the platform as well as by human maintenance personnel, as well possibly as by other sensors and observations.

Referring again to expression **1208A** and expression 1, above, given a particular observation that exists within the associative memory instance; a particular observation's correlated larger context associates that particular observation with a particular health assessment profile, Health Assessment (i) ←→ Profile(i). An associative memory infrastructure may contain a similarity scoring mechanism either as an embedded function or externally provided function. The similarity scoring function may give a similarity score S(H(I) | | P(I)) = 1.0 I=1...N profile if the given observation is an observation from the Ith profile state space trajectory. This similarity score may be used when comparing an unknown profile to a known profile, as described later in operation **1212**.

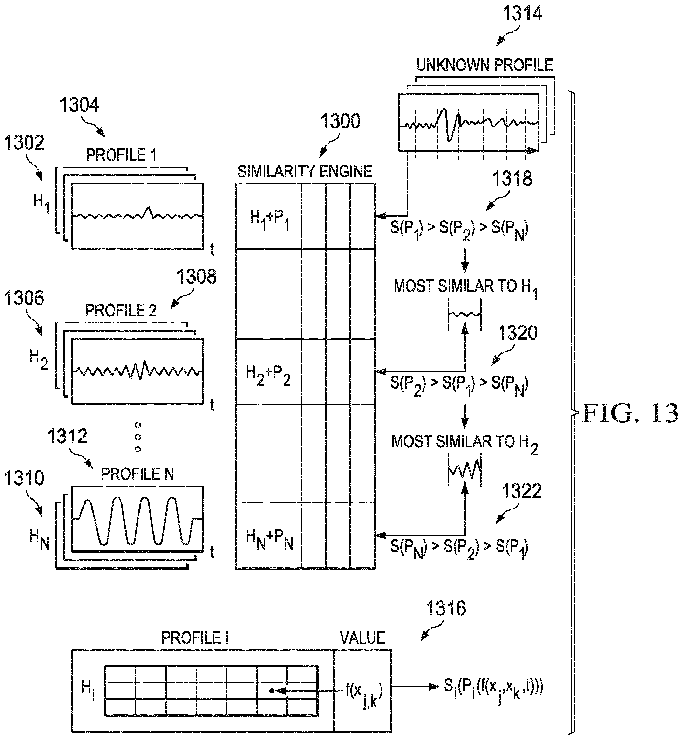

When the profile library of the associative memory is deemed complete, or at least is ready for use, the process may receive an unknown profile for the platform (operation **1210**). This unknown profile may be a new profile generated according to the procedures described above with respect to operations **1200** through **1208.** This unknown profile may represent a new set of sensor measurements, maintenance observations, and/or other observations for the platform. A user may wish to determine how this unknown profile compares to existing profiles in order to evaluate a health of the platform. Thus, the process may be invoked to compare the unknown profile to other profiles in the profile library (operation **1212**). Additional detail regarding these two operations, operation **1210** and operation **1212,** is provided in **Figure 13****.**

In summary however, the process may compare the unknown profile to known profiles in order to determine which of the known profiles best matches the unknown profile, based on the similarity score described above. The current health of the platform may then be approximated as the known health of the platform at the known profile.

Thus, after comparing the unknown profile to other profiles in the profile library, the process may generate a report of an approximated health of the platform based on a known profile in the library, the known profile being closest to the unknown profile (operation **1214**). This report may include text and/or figures, or even audio data, or other types of data, as graphically represented by report **1212A.** The process may terminate thereafter.

**Figure 13** is a block diagram illustrating use of similarity engine, in accordance with an illustrative embodiment. Similarity engine **1300** may be embodied in an associative memory, and/or may be implemented either by an associative memory or by a processor, possibly operating in conjunction with an associative memory. An example of an associative memory is associative memory **428** of **Figure 4** and an example of a process is processor unit **404** of **Figure 4****.** Use of similarity engine **1300** may be part of operations **1210** and **1212** of **Figure 12****.** Similarity engine **1300** may also be used in other environments, such as health monitoring environment **300** of **Figure 3****,** health monitoring system **1100** of **Figure 11****,** or health monitoring environment **1500** of **Figure 15****.**

Similarity engine **1300** may take as input a plurality of health assessments and profiles stored in an associative memory, such as those described with respect to **Figure 12****,** above. Thus, for example, **Figure 13** shows health assessment 1 (H₁) **1302** with associated profile 1 **1304** at time t, health assessment 2 (H₂) **1306** with associated profile 2 **1308** at time t, with multiple additional health assessments and profiles provided through health assessment N (H_{N}) **1310** with associated profile N **1312** at time t. Although the variable of "t" is used in each case, the actual value of "t" may vary from assessment to assessment and profile to profile. In other embodiments the variable "t", denoting time, may be expressed in relative delta times from one event to another and not necessarily as absolute times.

As used herein the term "profile" or "health profile" both may refer to multiple sets of data, one set for each source, and may further include correlations among the data. A source of data may be, for example, data output by a sensor on the platform. A source of data may be, for example, an observation by human maintenance personnel or a pilot. A source of data could be from many different objects or persons. Combined, the different sets of data may form a profile. In some cases, a profile may contain correlations among the data or other relationships among the data, such as additional data that indicates similarities among the data. Correlations or similarities may be among individual data, may be among different sets of data, or combinations thereof. Such correlations may be generated by an associative memory as part of constructing a profile. Information, including correlations among data, may be added to a profile after initial creation of the profile.

These health assessments and profiles may be instantiated in the associative memory, which may then access them as part of executing a query or a request to perform a comparison using similarity engine **1300.** For example, unknown profile **1314** may be received. Unknown profile **1314** also may be instantiated in the associative memory. The associative memory may then receive a query to compare unknown profile **1314** to one or more, possibly all, of the known health assessments and profiles already stored in the associative memory. The goal of the query is to determine a health assessment that should be assigned to unknown profile **1314.**

The associative memory may then generate similarity scores for one or more, possibly all, of the known profiles relative to unknown profile **1314.** This similarity score may be expressed as S(Pi), where "i" corresponds to a particular profile in question. This comparison process is also described more broadly with respect to **Figure 9** and **Figure 12****.**

More fully, the similarity score may be expressed as Sᵢ(Pᵢ(f(xⱼ,xₖ, t)), as shown at relation **1316.** Thus, for Health Assessment "i" (Hᵢ) and Profile "i" (Profileᵢ), having values of f(x_{j,k}), a comparison to unknown profile **1314** may generate similarity score Si.

Stated differently, the associative memory may be queried with an observation from unknown profile **1314,** O(P(unknown)). As a result of comparing the unknown profile to known profiles, a similarity score, S(P(unknown)) is generated. This similarity score, S(P(unknown)) indicates the nearest health profile (I) and observations from known profiles where S(H(I) | P(I)) > S (P (unknown)) > S(H(j) | P (J) for all J <> I.

Specific examples of this procedure are shown in **Figure 13****.** If S(Pᵢ) > S(P₂) > S(P_{N}) (expression **1318**), then unknown profile **1314** is most similar to health profile H₁ **1302.** As a result, unknown profile **1314** is assigned the value of H₁ **1302.** In other words, the current health state of the platform is now considered to be the known health state of H₁ **1302.** If H₁ **1302** were, for example, "healthy", then the user could evaluate unknown profile **1314** as representing a healthy platform.

On the other hand, if S (P₂) > S(P₁) > S(P_{N}) (expression **1320),** then unknown profile **1314** is most similar to H₂ **1306.** If H₂ **1306** were, for example, "degraded," then the user could evaluate unknown profile **1314** as representing a degraded platform that might desirably be maintenanced. Likewise, if S(P_{N}) > S (P₂) > S(P₁) (expression **1322),** then unknown profile **1314** is most similar to H_{N} **1310.** The corresponding health state of H_{N} **1310** would then be assigned to unknown profile **1314.**

Although **Figure 13** illustrates one mechanism for evaluating the current health of a platform based on unknown profile **1314** received for that platform, other techniques may also be used. For example, a similarity score might not be generated. Instead, similarity engine **1300** may use a direct comparison of profiles, identify the best match, and assign a health assessment to the unknown profile accordingly. In another variation, unknown profile **1314** may be synthesized or summarized and compared to synthesized known profiles. Other techniques may also be used to assign a health assessment to unknown profile **1314.**

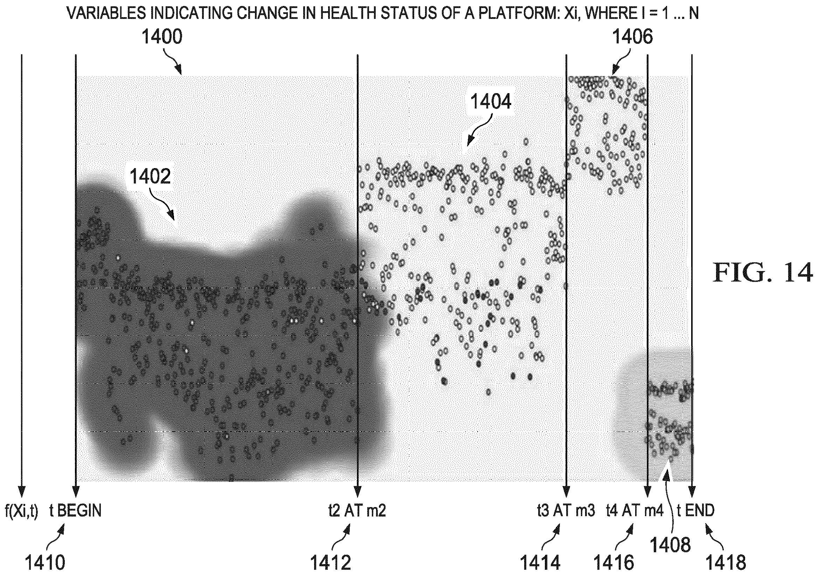

**Figure 14** is an illustration of a plurality of observations, in accordance with an advantageous embodiment. **Figure 14** is similar to **Figure 6****,** but contains additional detail. Thus, for example, plurality of observations **1400** may be an example of one implementation of plurality of observations **510** in **Figure 5****.** Plurality of observations **1400** may comprise parameters for monitoring the health of a platform.

When taken as a set, a group of observations may compose a profile, such as the profiles described with respect to **Figure 12** and **Figure 13****.** An example of a profile might be, for example, group of observations **1402** that is taken between a beginning time, t begin **1410,** and a second time t2 **1412.** Second time t2 **1412** may be a particular time when a particular maintenance action or set of maintenance actions is performed. Data after second time t2 **1412** may reflect all sensor and maintenance data at a particular time. A health assessment may be assigned to a group of observations. Thus, for example, group of observations **1402** between time t begin **1410** and second time t2 **1412** may correspond to a health assessment of a "degraded health state" for which maintenance of the platform may be desirable. In this manner, **Figure 14** shows a visual representation by which a user may quickly evaluate a health status of a platform.

Similarly, group of observations **1404** between second time t2 **1412** and third time t3 **1414,** after maintenance action m2 and before maintenance action m3, may reflect a "repair desirable" health state, in which a user may desire to more quickly take action to cause the platform to be repaired. Likewise, group of observations **1406** between third t3 **1414** and fourth time t4 **1416** may reflect a "faulty" health state for which one or more parts of the platform may be replaced, or for which the platform is not operating within desired parameters. Group of observations **1406** may be observations taken after maintenance action m3 but before maintenance action m4.

After maintenance action m4, another health assessment may be performed, between fourth time t4 **1416** and end time t_{end} **1418.** Group of observations **1408** may indicate a "healthy" state of the platform after maintenance action m4.

**Figure 15** is a block diagram of a health monitoring environment using an associative memory in accordance with an illustrative embodiment. Health monitoring environment **1500** may be a variation of health monitoring environment **300** of **Figure 3** or health monitoring system **1100** of **Figure 11****.** Health monitoring environment **1500** of **Figure 15** may be implemented using associative memory **1502,** which may be for example associative memory **428** of **Figure 4****.**

In an illustrative embodiment, health monitoring environment **1500** may include associative memory **1502.** Associative memory **1502** may include plurality of data and a plurality of associations among the plurality of data **1504.** The plurality of data and their associations may be collected into associated groups. Associative memory **1502** may be configured to be queried based on at least indirect relationships **1506** among the plurality of data. Associative memory **1502** also may be queried based on direct relationships **1508** or both indirect relationships **1506** and direct relationships **1508** together. Associative memory **1502** also may store plurality of known health profiles for a vehicle or platform **1510.**

Health monitoring environment **1500** also may include input device **1512** in communication with associative memory **1502.** Input device **1512** may be configured to receive current health profile **1514** of the vehicle or platform. Current health profile **1514** may be received from a variety of sources, including sensor data on the platform or off-board the platform, maintenance data such as from human operators or off-board or on-board sensors, or many other sources. In an illustrative embodiment, current health profile **1514** may be generated according to the procedures described with respect to **Figure 12** and **Figure 13****.**

Health monitoring environment **1500** also may include comparator **1516.** Comparator **1516** may be one or more tangible processors, associative memory **1502** itself, or both operating together. Comparator **1516** may be configured to compare, in conjunction with associative memory **1502,** current health profile **1514** with plurality of known health profiles for a vehicle or platform **1510** to generate comparison **1518.** Comparator **1516** further may be configured to generate, based on comparison **1518** and in conjunction with associative memory **1502,** report **1520** on a current health of the vehicle or platform.

In an illustrative embodiment, current health profile **1514** may be sensor data obtained from a sensor disposed on the vehicle. Current health profile **1514** further may be maintenance data obtained from maintenance records derived from on-ground maintenance of the vehicle or platform. Current health profile **1514** further may be a record of an observation of the vehicle performed by a human, wherein the observation is different than the sensor data.

In an illustrative embodiment, comparing further includes identifying an indirect relationship between a first attribute in current health profile **1514** and a second attribute in plurality of known health profiles for a vehicle or platform **1510.** Other variations are possible.

In another variation, input device **1512** may be in communication with associative memory **1502,** or with both associative memory **1502** and comparator **1516.** Input device **1512** may be configured to receive sensor data relating to measurements taken by a sensor disposed on the platform. Input device **1502** further may be configured to receive maintenance data relating to maintenance of the platform, wherein the maintenance data is distinct from and unrelated to the sensor data. Comparator **1516** further may be configured to use both the sensor data and the maintenance data in conjunction with associative memory **1502** to generate a report of a health of the platform.

In an illustrative embodiment, the maintenance data may be a report submitted by a human. In an illustrative embodiment, the platform may be an aircraft and the sensor data may be information relating to conditions experienced by the aircraft during operation of the aircraft.

In an illustrative embodiment, associative memory **1502** may be part of an off-board computer system, such as on-board computer system **1104** of **Figure 11****.** In this case, the maintenance data may be a report submitted by human ground crew personnel. Additionally, the input device may be further configured to receive a plurality of additional information in a plurality of different formats. In this case, comparator **1516** further may be configured to use not only the sensor data and the maintenance data, but also the plurality of additional information, in conjunction with associative memory **1502** to generate the report.

In another illustrative embodiment, the platform may be an aircraft. In this case, the plurality of additional information may be selected from one or more of the group consisting of: a measurement of the aircraft by an off-board device, data from a flight system of the aircraft, a past maintenance record of the aircraft, a report by a pilot of the aircraft, a report by a ground crew operator responsible for maintaining the aircraft, a first profile of an ideal health of the aircraft, and a second profile of the aircraft in a condition for which maintenance is desired.

In another illustrative embodiment, comparator **1516** further may be configured to use not only the sensor data and the maintenance data, but also a known health profile of the platform, in conjunction with associative memory **1502** to generate the report. In another illustrative embodiment, the sensor data and the maintenance data may be part of one or more current health profiles of the platform. In this case, comparator **1516** further may be configured to generate the report by assigning a current health status of the platform based on a maximum similarity between the one or more current health profiles and the known health profile of the platform.

In another illustrative embodiment, comparator **1516** further may be configured to use associative memory **1502** to identify a potential cause of a component of the platform being outside of a set parameter. In this case, comparator **1516** may be configured to identify the potential cause based on the report, the sensor data, and the maintenance data. Other variations are possible.

**Figure 16** is a flowchart of a process for monitoring a platform, in accordance with an illustrative embodiment. The process shown in **Figure 16** may be implemented using health monitoring environment **300** of **Figure 3****,** health monitoring system **1100** of **Figure 11****,** or health monitoring environment **1500** of **Figure 15****.** The process shown in **Figure 16** may be a variation of the process shown in **Figure 7** through **Figure 10****,** or **Figure 12****.** The process shown in **Figure 16** may be implemented using an associative memory, such as associative memory **428** of **Figure 4** and one or more processors, such as processor unit **404** in **Figure 4****.** Although the operations presented in **Figure 16** are described as being performed by "a process," the operations are being performed by at least one tangible processor or using one or more physical devices, as described elsewhere herein.

The process receives in an associative memory, a current health profile of a vehicle, wherein the associative memory comprises a plurality of data and a plurality of associations among the plurality of data, wherein the plurality of data and their associations are collected into associated groups, wherein the associative memory is configured to be queried based on at least indirect relationships among the plurality of data, and wherein the associative memory also stores a plurality of known health profiles for a vehicle (operation **1600).** The process then compares, using a computer system in conjunction with the associative memory, the current health profile with the plurality of known health profiles to generate a comparison (operation **1602).** The process then generates, based on the comparison and using the computer system in conjunction with the associative memory, a report on a current health of the vehicle (operation **1604**). The process may terminate thereafter.

In an illustrative embodiment, the current health profile may be sensor data obtained from a sensor disposed on the vehicle. In this case, the current health profile further may be maintenance data obtained from maintenance records derived from on-ground maintenance of the vehicle. Still further, the current health profile further may be a record of an observation of the vehicle performed by a human. In yet another illustrative embodiment, comparing may further include identifying an indirect relationship between a first attribute in the current health profile and a second attribute in the plurality of known health profiles. Other variations are possible.

The flowcharts and block diagrams in the different depicted embodiments illustrate the architecture, functionality, and operation of some possible implementations of apparatus, methods, and computer program products. In this regard, each block in the flowcharts or block diagrams may represent a module, segment, or portion of computer-usable or readable program code, which comprises one or more executable instructions for implementing the specified function or functions. In some alternative implementations, the function or functions noted in the block may occur out of the order noted in the figures. For example, in some cases, two blocks shown in succession may be executed substantially concurrently, or the blocks may sometimes be executed in the reverse order, depending upon the functionality involved.

For example, in some illustrative embodiments, the selection of a health state in operation **1002** may be performed after the creation of the known profile in operation **1010.** With this type of process, the known profile may be associated with a health state after the known profile is created. Further, the selection of the health state for the known profile may be based on training information and/or maintenance information.

Thus, the different illustrative embodiments provide a method and apparatus for monitoring a platform. In one illustrative embodiment, an apparatus comprises a computer system and a sensor network. The sensor network is associated with a platform. The computer system is connected to the sensor network and is configured to receive information from the sensor network. The computer system is configured to form observations from the information for a current profile. The computer system compares the current profile with a number of known profiles to identify a health state of the platform.

The different illustrative embodiments can take the form of an entirely hardware embodiment, an entirely software embodiment, or an embodiment containing both hardware and software elements. Some embodiments are implemented in software, which includes, but is not limited to, forms such as, for example, firmware, resident software, and microcode.

Furthermore, the different embodiments can take the form of a computer program product accessible from a computer-usable or computer-readable medium providing program code for use by or in connection with a computer or any device or system that executes instructions. For the purposes of this disclosure, a computer-usable or computer-readable medium can generally be any tangible apparatus that can contain, store, communicate, propagate, or transport the program for use by or in connection with the instruction execution system, apparatus, or device.

The computer-usable or computer-readable medium can be, for example, without limitation, an electronic, magnetic, optical, electromagnetic, infrared, or semiconductor system, or a propagation medium. Nonlimiting examples of a computer-readable medium include a semiconductor or solid state memory, magnetic tape, a removable computer diskette, a random access memory (RAM), a read-only memory (ROM), a rigid magnetic disk, and an optical disk. Optical disks may include compact disk - read only memory (CD-ROM), compact disk - read/write (CD-R/W), and DVD.

Further, a computer-usable or computer-readable medium may contain or store a computer readable or usable program code such that when the computer readable or usable program code is executed on a computer, the execution of this computer-readable or usable program code causes the computer to transmit another computer-readable or usable program code over a communications link. This communications link may use a medium that is, for example, without limitation, physical or wireless.

A data processing system suitable for storing and/or executing computer-readable or computer-usable program code will include one or more processors coupled directly or indirectly to memory elements through a communications fabric, such as a system bus. The memory elements may include local memory employed during actual execution of the program code, bulk storage, and cache memories, which provide temporary storage of at least some computer-readable or computer-usable program code to reduce the number of times code may be retrieved from bulk storage during execution of the code.

Input/output or I/O devices can be coupled to the system either directly or through intervening I/O controllers. These devices may include, for example, without limitation, keyboards, touch screen displays, and pointing devices. Different communications adapters may also be coupled to the system to enable the data processing system to become coupled to other data processing systems, remote printers, or storage devices through intervening private or public networks. Nonlimiting examples are modems and network adapters and are just a few of the currently available types of communications adapters.

The illustrative embodiments may take different forms. For example, the illustrative embodiments may provide for an apparatus. The apparatus may include a sensor network associated with a platform in which the sensor network is configured to monitor health of the platform. The apparatus may also include a number of systems associated with the platform in which the number of systems and the sensor network are configured to provide information for the platform. The apparatus may also include a computer system connected to the sensor network and the number of systems in which the computer system is configured to receive the information, process the information to form a plurality of observations from the information, and create a current profile from the plurality of observations and the information in which the current profile is used to identify a health state for the platform.

In another illustrative embodiment, the computer system is in a location remote to the platform and is connected to the sensor network and the number of systems through another computer system on the platform. In another illustrative embodiment, the computer system is configured to perform a number of operations selected from at least one of receiving at least a portion of the information from the number of systems for the platform; grouping observations in the plurality of observations based on similarities between the observations, in which a number of groups are created to form the current profile; identifying a number of pieces of information in the information; creating an observation from each piece of information in the number of pieces of information to form the plurality of observations; placing the plurality of observations in an associative memory in the computer system to form the current profile for the associative memory; receiving training information obtained during a known health state of the platform to create a known profile in a number of known profiles; using the maintenance information and the current profile to identify a potential cause of the health state for the platform; and selectively generating an alert based on the health state of the platform.

In another illustrative embodiment, the apparatus may further include the number of systems, wherein the number of systems comprises at least one of a navigation system, avionics for an aircraft, an environmental control system, a surface control system, a flight control system, a drive system, a landing system, and a propulsion system. In another illustrative embodiment, the computer system creates the current profile from the plurality of observations by analyzing the associative memory in the computer system. In another illustrative embodiment, the training information comprises information previously collected for the platform, maintenance information about the platform, and timestamps of the information previously collected for the platform.

In another illustrative embodiment, in creating the current profile, the computer system is further configured to select a portion of the plurality of observations based on a number of maintenance events performed for the platform to create the current profile. In another illustrative embodiment, the computer system is further configured to associate metadata with the information. In another illustrative embodiment, the computer system is further configured to select the portion of the plurality of observations using the number of maintenance events and the metadata. In another illustrative embodiment, the metadata is comprised of at least one of a timestamp for a piece of information and an identifier of a source of the piece of information.

In another illustrative embodiment, the training information for the known health state comprises the information received from one of before a selected date information, after the selected date information, and during a period of time information. In another illustrative embodiment, a portion of the information is received from a maintenance database in the number of systems. In another illustrative embodiment, the information comprises at least one of data, commands, and messages.

In another illustrative embodiment the apparatus may also include the platform, wherein the platform is selected from one of a mobile platform, a stationary platform, a land-based structure, an aquatic-based structure, a space-based structure, an aircraft, a surface ship, a tank, a personnel carrier, a train, a spacecraft, a space station, a satellite, a submarine, an automobile, a power plant, a bridge, a dam, a wind turbine, a manufacturing system, a building, a wing, a stabilizer, an engine, a hydraulic system, a power transmission gear box, and a shaft.

The illustrative embodiments also provide for a system for monitoring health of a platform. The system includes a sensor network associated with the platform. The system also includes a number of systems associated with the platform. The number of systems and the sensor network are configured to provide information for the platform. The system also includes a computer system associated with the platform in which the computer system is in communication with the sensor network and the number of systems and is configured to receive the information from the sensor network and the number of systems associated with the platform, process the information to form a plurality of observations from the information, group the plurality of observations into a number of groups based on similarities between observations in the plurality of observations to form a current profile, compare the current profile to a number of known profiles to form a comparison, and identify a health state of the platform using the comparison. In an illustrative embodiment, the platform is an aircraft.

The illustrative embodiments also provide for a method. The method may include receiving information from monitoring the platform, wherein the information is received from a sensor network and a number of systems associated with the platform. The method may also include forming a plurality of observations from the information. The method may also include creating a profile from the plurality of observations in which the profile is used to monitor the platform.

In an illustrative embodiment, the step of forming the plurality of observations from the information comprises identifying a number of pieces of information in the information and creating an observation from each piece of information in the number of pieces of information to form the plurality of observations. In an illustrative embodiment, the profile is selected from one of a current profile and a known profile and wherein the step of creating the profile comprises: grouping observations in the plurality of observations to form a number of groups based on similarities between the observations in the plurality of observations. In an illustrative embodiment, the method also includes associating metadata with the information, wherein the metadata comprises at least one of a timestamp for a piece of information and an identifier of a source of the piece of information.

The description of the different illustrative embodiments has been presented for purposes of illustration and description, and it is not intended to be exhaustive or limited to the embodiments in the form disclosed. Many modifications and variations will be apparent to those of ordinary skill in the art. Further, different illustrative embodiments may provide different advantages as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

### Clauses

1. A platform health monitoring system comprising:
   an associative memory comprising a plurality of data and a plurality of associations among the plurality of data, wherein the plurality of data and their associations are collected into associated groups, wherein the associative memory is configured to be queried based on at least indirect relationships among the plurality of data, and wherein the associative memory also stores a plurality of known health profiles for a platform;
   an input device in communication with the associative memory, the input device configured to receive a current health profile of the platform; and
   a comparator configured to compare, in conjunction with the associative memory, the current health profile with the plurality of known health profile to generate a comparison, the comparator further configured to generate, based on the comparison and in conjunction with the associative memory, a report on a current health of the platform.
2. The platform health monitoring system of clause 1, wherein the current health profile comprises sensor data obtained from a sensor disposed on the platform.
3. The platform health monitoring system of clause 1 or clause 2, wherein the platform comprises an aircraft and wherein the current health profile further comprises maintenance data obtained from maintenance records derived from on-ground maintenance of the aircraft.
4. The platform health monitoring system of clause 2, wherein the current health profile further comprises a record of an observation of the platform performed by a human, wherein the observation is different than indications derived from the sensor data.
5. The platform health monitoring system of any one clauses 1 to 4, wherein comparing further comprises identifying an indirect relationship between a first attribute in the current health profile and a second attribute in the plurality of known health profiles.
6. The platform health monitoring system of any one of clauses 1 to 5, wherein at least some of the plurality of associations are generated by the associative memory.
7. The platform health monitoring system of clause 1, wherein the input device is configured to receive sensor data relating to measurements taken by a sensor disposed on the platform, the input device further configured to receive maintenance data relating to maintenance of the platform, wherein the maintenance data is distinct from and unrelated to the sensor data; and the comparator is configured to use both the sensor data and the maintenance data in conjunction with the associative memory to generate the report of a health of the platform.
8. The system of clause 7, wherein the maintenance data comprises a report submitted by a human.
9. The system of clause 7 or clause 8, wherein the platform comprises an aircraft and wherein the sensor data comprises information relating to conditions experienced by the aircraft during operation of the aircraft.
10. The system of any one of clauses 7 to 9, wherein the associative memory is part of an off-board computer system.
11. The system of clause 7, wherein the maintenance data comprises a report submitted by human ground crew personnel.
12. The system of clause 7, wherein the input device is further configured to receive a plurality of additional information in a plurality of different formats, and wherein the comparator is further configured to use not only the sensor data and the maintenance data, but also the plurality of additional information, in conjunction with the associative memory to generate the report.
13. The system of clause 12, wherein the platform comprises an aircraft and wherein the plurality of additional information is selected from one or more of the group consisting of: a measurement of the aircraft by an off-board device, data from a flight system of the aircraft, a past maintenance record of the aircraft, a report by a pilot of the aircraft, a report by a ground crew operator responsible for maintaining the aircraft, and a first profile of an ideal health of the aircraft.
14. The system of any one of clauses 7 to 13, wherein the comparator is further configured to use not only the sensor data and the maintenance data, but also a known health profile of the platform, in conjunction with the associative memory to generate the report.
15. The system of clause 14, wherein the sensor data and the maintenance data are part of one or more current health profiles of the platform, and wherein the comparator is further configured to generate the report by assigning a current health status of the platform based on a maximum similarity between the one or more current health profiles and the known health profile of the platform.
16. The system of any one of clauses claim 7 to 15, wherein the comparator is further configured to use the associative memory to identify a potential cause of a component of the platform being outside of a set parameter, wherein the comparator is configured to identify the potential cause based on the report, the sensor data, and the maintenance data.
17. A method comprising:
   receiving in an associative memory a current health profile of a platform, wherein the associative memory comprises a plurality of data and a plurality of associations among the plurality of data, wherein the plurality of data and their associations are collected into associated groups, wherein the associative memory is configured to be queried based on at least indirect relationships among the plurality of data, and wherein the associative memory also stores a plurality of known health profiles for a platform;
   comparing, using a computer system in conjunction with the associative memory, the current health profile with the plurality of known health profiles to generate a comparison;
   generating, based on the comparison and using the computer system in conjunction with the associative memory, a report on a current health of the platform.
18. The method of clause 17, wherein the current health profile comprises sensor data obtained from a sensor disposed on the platform.
19. The method of clause 17 or clause 18, wherein the platform comprises a vehicle and wherein the current health profile further comprises maintenance data obtained from maintenance records derived from on-ground maintenance of the vehicle.
20. The method of clause 19, wherein the current health profile further comprises a record of an observation of the vehicle observed by a human.
21. A system for monitoring health of a platform, the system comprising:
   a sensor network associated with the platform;
   a number of systems associated with the platform, wherein the number of systems and the sensor network are configured to provide information for the platform, wherein a plurality of observations is in the information; and
      a computer system associated with the platform in which the computer system is in communication with the sensor network and the number of systems and is configured to receive the information including training information obtained during a known health state of the platform from the sensor network and the number of systems associated with the platform, to create associations between pieces of the information in an associative memory responsive to metadata in the plurality of observations; to process the information in the associative memory to create a known profile in a number of known profiles, to group the plurality of observations into a number of groups based on similarities between ones of individual observations in the plurality of observations to form a current profile based on maintenance information and metadata used to select a portion of the plurality of observations that are formed after replacement of a part in the platform, to compare the current profile to a number of known profiles to form a comparison, and to identify a health state of the platform in groups corresponding to a degraded health state, a needs repair health state, a faulty health state, and a repair state using the comparison.
22. The system of clause 21, wherein the platform is an aircraft.

## Claims

1. A method for monitoring a platform, the method comprising:
receiving information from monitoring the platform including training information obtained during a known health state of the platform by an input/output device and a communications unit that provides communications through the use of either or both physical and wireless communications links, wherein the information is received from a sensor network and a number of systems associated with the platform;
forming a plurality of observations from the information including the received training information to create a known profile in a number of known profiles;
creating associations between pieces of the information in an associative memory from metadata of the plurality of observations; and
creating a profile in the associative memory from the associations from the plurality of observations based on maintenance information and metadata used to select the portion of plurality of observations that are formed after replacement of a part, in which the profile is used to monitor the platform.

2. The method of claim 1, wherein the step of forming the plurality
of observations from the information comprises:
identifying a number of pieces of information in the information; and
creating an observation from each piece of information in the number of pieces of information to form the plurality of observations.

3. The method of claim 1 or claim 2, wherein the profile is selected from one of a current profile and a known profile and wherein the step of creating the profile comprises:
grouping observations in the plurality of observations to form a number of groups corresponding to degraded health state, needs repair health state, faulty health state, and repair state based on similarities between the observations in the plurality of observations.

4. The method of any preceding claim, further comprising:
associating the metadata with the information, wherein the metadata comprises at least one of a timestamp for a piece of information and an identifier of a source of the piece of information.

5. An apparatus for a platform including a health monitoring system comprising:
a sensor network associated with the platform in which the sensor network is configured to monitor health of the platform;
a number of systems associated with the platform in which the number of systems and the sensor network are configured to provide information for the platform; and
a computer system connected to the sensor network, and the number of systems in which the computer system is configured to receive the information and process the information,
wherein the apparatus provides an improvement in scoring a plurality of observations in the information received, **characterized in that**:
an associative memory is connected to the computer system and is configured to create associations from the plurality of observations using metadata from the plurality of observations from the information including the received training information to create a known profile in a number of known profiles, and to create a current profile in the associative memory from a portion of the plurality of observations based on maintenance information and the metadata used to select associations from the portion of the plurality of observations that are formed after replacement of a part in the platform;
wherein the associative memory is further configured to use information in the current profile to identify a health state for the platform in groups corresponds to a degraded health state, a needs repair health state, a faulty health state, and a repair state.

6. The apparatus of claim 5, wherein the computer system is in a location remote to the platform and is connected to the sensor network and the number of systems through another computer system on the platform.

7. The apparatus of claim 5 or claim 6, wherein the computer system is further configured to:
receive at least a portion of the information from the number of systems for the platform;
identify a number of pieces of the information in the information;
create an observation from each piece of information in the number of pieces of the information to form the portion of the plurality of observations;
selectively generate an alert based on the health state of the platform.

8. The apparatus of any of claims 5 to 7, wherein the number of systems comprises at least one of a navigation system, avionics for an aircraft, an environmental control system, a surface control system, a flight control system, a drive system, a landing system, and a propulsion system.

9. The apparatus of any of claims 5 to 8, wherein the computer system is configured to create the current profile from the portion of the plurality of observations by analyzing the associative memory in the computer system.

10. The apparatus of any of claims 5 to 9, wherein the training information comprises information previously collected for the platform, maintenance information about the platform, and timestamps of the information previously collected for the platform.

11. The apparatus of any of claims 5 to 10, wherein the metadata is comprised of at least one of a timestamp for a piece of information and an identifier of a source of the piece of information.

12. The apparatus of any of claims 5 to 11, wherein the training information for the known health state comprises the information received from one of before a selected date information, after the selected date information, and during a period of time information.

13. The apparatus of any of claims 5 to 12, wherein a portion of the information is received from a maintenance database in the number of systems.

14. The apparatus of any of claim 5 to 13, wherein the information comprises at least one of data, commands, and messages.

15. The apparatus of any of claim 5 to 14 further comprising:
the platform, wherein the platform is selected from one of a mobile platform, a stationary platform, a land-based structure, an aquatic-based structure, a space-based structure, an aircraft, a surface ship, a tank, a personnel carrier, a train, a spacecraft, a space station, a satellite, a submarine, an automobile, a power plant, a bridge, a dam, a wind turbine, a manufacturing system, a building, a wing, a stabilizer, an engine, a hydraulic system, a power transmission gear box, and a shaft.
